# FASCICULE DE BREVET EUROPEEN

(11) **EP 3 807 029 B1**
(45) Date de publication et mention de la délivrance du brevet: **09.11.2022**
(21) Numéro de dépôt: 19744753.5
(22) Date de dépôt: 23.05.2019
(51) Int. Cl.: G05B 19/401, B33Y 30/00, B33Y 50/02, B23K 26/04, B22F 10/25, B22F 10/31, B22F 12/90, B05B 7/22, B33Y 40/00, B29C 64/393

(54) **DISPOSITIF ET PROCÉDÉ DE DÉTECTION DE LA POSITION D'UN FAISCEAU LASER**
VORRICHTUNG UND VERFAHREN ZUR ERFASSUNG DER POSITION EINES LASERSTRAHLS
DEVICE AND METHOD FOR DETECTING THE POSITION OF A LASER BEAM

(30) Priorité: 28.05.2018 FR 1854501
(43) Date de publication de la demande: 21.04.2021
(73) Titulaire: AddUp, 63118 Cébazat (FR); Irepa Laser, 67400 Illkirch-Graffenstaden (FR)
(72) Inventeur: FRECHARD, Jonathan, 67400 Illkirch Graffenstaden (FR); SCHEHR, François, 67470 Mothern (FR); BOISSELIER, Félix, 67115 Plobsheim (FR); BOISSELIER, Didier, 67115 Plobsheim (FR); BERNARD, Eric, 67100 Strasbourg (FR)
(74) Mandataire: Regimbeau
(86) Numéro de dépôt international: PCT/FR2019/051183
(87) Numéro de publication internationale: WO 2019/229335

(56) Documents cités:
- DE-A1-102009 016 585
- US-A- 5 521 374
- US-A1- 2014 027 421

## Description

### Domaine de l'invention

La présente invention concerne le domaine de la fabrication additive et plus précisément, un dispositif et un procédé de détection de la position d'un faisceau laser.

### Etat de l'art

De nos jours, la fabrication additive est considérée comme une technologie de production industrielle. A ce titre, la fabrication additive est utilisée dans de nombreux secteurs industriels tels que l'aéronautique ou le médical qui appartiennent à des domaines exigeants. Ainsi, il est nécessaire de produire des pièces de très bonne qualité pour le client final. Par conséquent, toute dérive du procédé de fabrication doit être rapidement identifiée. De plus, le client final est souvent intéressé par l'historique de fabrication de la pièce qui permet d'assurer une traçabilité du procédé de fabrication.

Dans l'art antérieur, le procédé de dépôt de matière sous énergie concentrée repose sur le principe de dépôt de poudres métalliques à l'état fondu sur un substrat solide.

En effet, le principe initial consiste à utiliser un outil pour envoyer de la poudre métallique sous forme solide, avec une granulométrie définie, typiquement de l'ordre de 45 à 90µm, dans un faisceau de puissance tel qu'un faisceau laser ou un faisceau d'électrons. En traversant le faisceau laser, la poudre est échauffée et fondue, et atteint immédiatement le substrat à l'état fondu pour former une couche. L'outil se déplaçant, il est ainsi possible de créer des cordons métalliques sur le substrat. Les couches sont ensuite superposées de manière à créer des pièces volumiques. La poudre métallique est à la base de toute construction effectuée en fabrication additive à l'aide de ce procédé et par conséquent, une maîtrise du jet de poudre et de l'outil permettant sa mise en forme, c'est-à-dire la buse, est indispensable.

La poudre, de granulométrie très fine, est envoyée sous forme d'un jet composé : d'un gaz de transport (appelé gaz porteur), et de particules de poudre métallique. Ce jet permet de porter la poudre jusqu'au faisceau laser. Le débit de gaz s'exprime en litres/minutes et le débit de poudre en grammes/minutes.

Le jet de poudre est issu d'un distributeur de poudre et voyage dans un tube jusqu'à l'outil de dépose, au plus près du faisceau laser, dans lequel il est injecté. L'élément mécanique par lequel sort le jet de poudre est appelé buse. La poudre métallique est déposée sur le substrat, distant de quelques millimètres de la buse. Cette dernière a pour rôle de guider de manière maitrisée le jet de poudre incluant le gaz porteur afin que ledit jet de poudre atteigne le faisceau laser de manière optimale. La buse se compose de plusieurs pièces mécaniques, dont des cônes concentriques, qui ont pour but de guider la poudre. Le guidage du jet de poudre dépend de deux cônes : le cône extérieur et le cône intermédiaire.

La poudre est ainsi dirigée dans le faisceau laser par un jet de forme conique annulaire. Il est comme « focalisé » dans le faisceau laser, qui doit se trouver au centre de ce jet conique.

Cependant, il est difficile d'arriver à positionner correctement le faisceau laser dans l'espace dans la mesure où le faisceau laser est immatériel.

Il existe des solutions permettant de réaliser la détection de la position du faisceau laser. Toutefois, ces solutions ne sont valables que pour des fasiceau laser de faible puissance. Des dispositifs de calibration de source laser sont divulgués par exemple dans US 2014/027421 A1, DE 10 2009 016585 A1 et US 5 521 374 A.

Il s'avère nécessaire de proposer un dispositif et un procédé de détection qui surmontent les inconvénients mentionnés ci-dessus. Notamment, il s'avère nécessaire de proposer un dispositif et un procédé de détection de la position du faisceau laser qui permettent d'obtenir la position du faisceau laser par rapport à une position connue et ce pour des puissances élevées du faisceau laser.

### Résumé de l'invention

Selon un premier aspect, l'objet de l'invention concerne un dispositif selon la revendication 1, de détection de la position d'un faisceau laser de diamètre déterminé et émis par un laser d'une machine de fabrication additive, ledit dispositif de détection comprenant une partie supérieure comprenant une zone de balayage du faisceau laser, ladite zone de balayage étant située en dessous d'une ouverture centrale circulaire dans une surface supérieure de la partie supérieure, et comprenant en son centre un trou circulaire de diamètre essentiellement égal au diamètre du faisceau laser et de position déterminée, la partie supérieure comprenant un premier et un deuxième élément, le deuxième élément comprenant le trou circulaire, le premier et le deuxième élément étant configurés de sorte que les réflexions du faisceau laser entre le premier et le deuxième élément sont infinies pour dissiper l'énergie du faisceau laser ;
le dispositif de détection comprenant une partie inférieure, la partie inférieure comprenant au moins un capteur pour capter une partie de l'énergie transmise par le faisceau laser et comprenant une plaque martyre en graphite pour absorber la partie restante de l'énergie transmise par le faisceau laser ;
de sorte que lorsque le faisceau laser balaie la zone de balayage selon une pluralité de positions, le capteur capte une partie de l'énergie transmise par le faisceau laser pour chaque position, la partie de l'énergie transmise étant maximale lorsque le faisceau laser est aligné avec le trou circulaire.

De manière préférée, le capteur comprend une photodiode.

De manière préférée, le capteur comprend trois photodiodes.

De manière préférée, le premier élément comprend des évents.

De manière préférée, le deuxième élément comprend le trou circulaire.

Selon un deuxième aspect, l'objet de l'invention concerne un procédé, selon la revendication 5, de détection de la position d'un faisceau laser émis par un laser d'une machine de fabrication additive par un dispositif de détection selon le premier aspect, comprenant les étapes suivantes :
- émission d'un faisceau laser de diamètre déterminé ;
- balayage du faisceau laser sur toute une zone de balayage déterminée comprenant un trou circulaire de diamètre essentiellement égal au diamètre du faisceau laser et de position déterminée, ledit balayage comprenant une pluralité de positions du faisceau laser ;
- détection d'une partie de l'énergie transmise par le faisceau laser pour chaque position du faisceau laser lors du balayage ;
- mesure et filtrage du signal obtenu à l'aide d'un capteur, ledit signal représentant la quantité d'énergie lumineuse du laser qui traverse le trou circulaire et qui est réfléchi par la plaque martyre en graphite ;
- émission d'un signal électrique correspondant à la quantité d'énergie détectée pour chaque position du faisceau laser lors du balayage ;
- détermination de la valeur du signal électrique maximal ;
- recherche de l'instant t correspondant à la position de la tête de fabrication pour la valeur du signal électrique maximal ;
- détermination de la position du faisceau laser.

### Brève description des dessins

Les buts, objets et caractéristiques de l'invention apparaîtront plus clairement à la lecture de la description qui suit faite en référence aux dessins dans lesquels :
- la figure 1 est une représentation en vue éclatée d'un exemple de buse de dépose connue dans l'état de l'art,
- la figure 2 montre selon une vue en coupe et de manière schématique la buse de dépose de la figure 1, en l'absence du corps de buse et en présence du gaz porteur et du gaz secondaire,
- la figure 3 montre selon une vue en perspective, le dispositif de détection du faisceau laser, selon un mode de réalisation de l'invention,
- la figure 4 montre selon une vue en perspective la partie supérieure du dispositif de détection du faisceau laser selon la figure 3,
- la figure 5 montre le premier élément du dispositif de détection du faisceau laser selon la figure 4,
- la figure 6 montre le deuxième élément du dispositif de détection du faisceau laser selon la figure 4,
- la figure 7 montre selon une vue en coupe partielle, le dispositif de détection du faisceau laser selon la figure 4,
- la figure 8 montre de manière schématique et selon une vue en coupe, le dispositif de détection du faisceau laser selon un mode de réalisation de l'invention,
- la figure 9a montre de manière schématique un dispositif de centrage des cônes, selon un mode de réalisation ne faisant pas partie de l'invention.
- la figure 9b montre une image de dessous de la buse de dépose,
- la figure 9c montre un schéma de l'image de la figure 9b,
- la figure 10a montre selon une vue en perspective le dispositif de centrage des cônes selon un mode de réalisation ne faisant pas partie de l'invention.
- la figure 10b montre selon une vue en coupe partielle le dispositif de centrage des cônes selon la figure 10a,
- la figure 11 représente selon une vue en perspective, un système d'analyse de jet de poudre selon un mode de réalisation ne faisant pas partie de l'invention
- la figure 12 représente selon une autre vue en perspective, un système d'analyse de jet de poudre en l'absence du dispositif de pesée, selon un mode de réalisation ne faisant pas partie de l'invention
- la figure 13 représente de manière schématique, selon une vue en perspective, un élément séparateur et la buse de dépose contenant quatre portions, selon un mode de réalisation ne faisant pas partie de l'invention.
- la figure 14 représente selon une vue en perspective, un élément séparateur contenant six portions, selon un autre mode de réalisation ne faisant pas partie de l'invention,
- la figure 15 représente selon une vue en coupe un dispositif de séparation selon un mode de réalisation ne faisant pas partie de l'invention,
- la figure 16 montre selon une vue en perspective le dispositif de séparation de la figure 15,
- la figure 17 montre de manière schématique une vue en coupe d'un dispositif de séparation selon un mode de réalisation ne faisant pas partie de l'invention,
- la figure 18 montre selon une vue en perspective un système d'ouverture selon un mode de réalisation ne faisant pas partie de l'invention
- la figure 19 montre selon une vue éclatée une partie du système d'ouverture, selon un mode de réalisation ne faisant pas partie de l'invention
- la figure 20 montre selon une vue partielle en coupe l'interaction entre les clapets et le dispositif d'ouverture, selon un mode de réalisation ne faisant pas partie de l'invention,
- la figure 21 montre selon une vue en perspective un entonnoir, selon un mode de réalisation ne faisant pas partie de l'invention.
- la figure 22 montre selon une vue en perspective un dispositif d'aspiration, selon un mode de réalisation ne faisant pas partie de l'invention,
- les figures 23a, 23b et 23c représentent selon une vue de face, un élément séparateur comprenant deux portions et localisé respectivement à trois hauteurs différentes, selon un mode de réalisation ne faisant pas partie de l'invention.

### Description détaillée d'un mode de réalisation

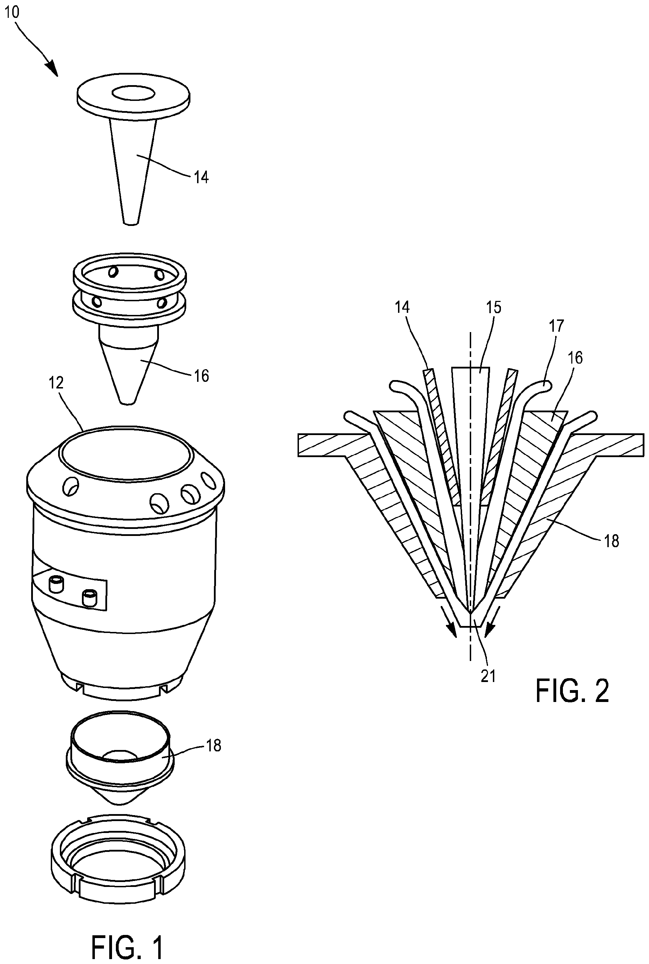

La présente invention concerne le procédé de DED (en anglais : Directed Energy Déposition), procédé de fabrication additive qui consiste notamment à construire une pièce dense sur un substrat, couche après couche, par la fusion de poudres métalliques injectées au travers d'un faisceau laser. Ce procédé est appliqué au moyen d'une machine comprenant une buse 10 ou buse de dépose. La figure 1 montre une vue éclatée d'une buse 10 comprenant un corps de buse 12, un premier cône ou cône intérieur 14, un deuxième cône ou cône intermédiaire 16 et un troisième cône ou cône extérieur 18. Le premier cône 14, le deuxième cône 16 et le troisième cône 18 sont en cuivre et sont agencés de manière concentrique.

Un faisceau laser 15 est émis par un laser. Une fibre optique permet de transporter le faisceau laser jusqu'à une tête optique (non montrée) sur laquelle est fixée la buse 10. Ensuite, le faisceau laser traverse la buse jusqu'au substrat (non montré).

Comme montré sur la figure 2, de manière schématique, le premier cône 14 est traversé par le faisceau laser 15 et n'est pas visible depuis l'extérieur de la buse 10. Le deuxième cône 16 est parcouru par un gaz 17 dit gaz secondaire tel que l'Argon permettant la mise en forme du jet de poudre afin de focaliser le flux de poudre. L'extrémité du deuxième cône est visible depuis l'extérieur de la buse. Le troisième cône 18 permet d'amener la poudre au niveau du bain de fusion sur le substrat à travers un gaz porteur 21 tel que l'Argon.

### - Détection du faisceau laser

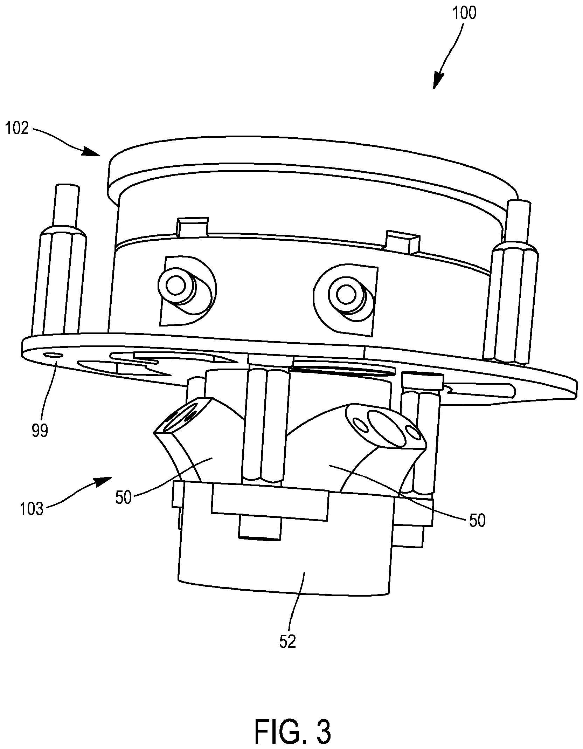

La figure 3 montre un dispositif de détection 100 du faisceau laser 15 qui comprend une partie supérieure 102 et une partie inférieure 103. Le dispositif de détection 100 permet de déterminer avec précision la position du faisceau laser par rapport audit dispositif de détection 100.

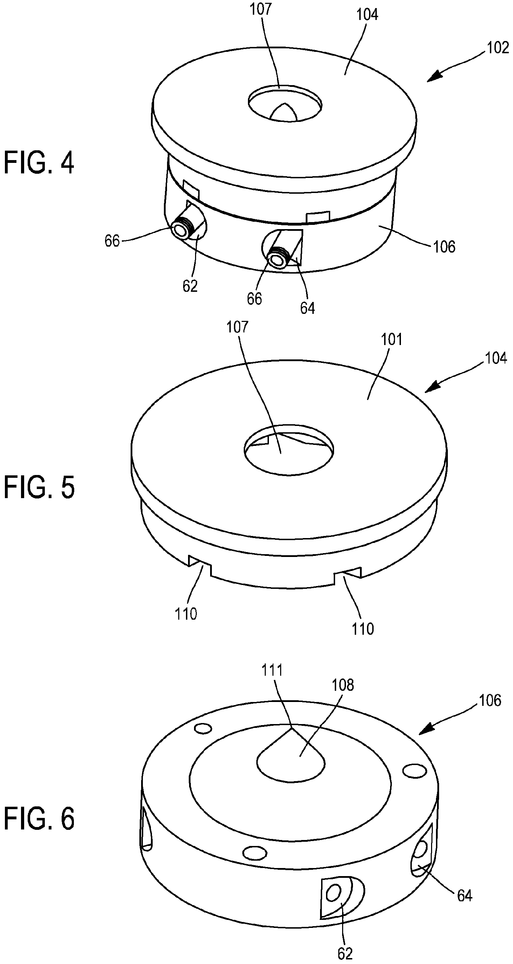

La partie supérieure 102 montrée sur la figure 4 comprend un premier élément 104 et un deuxième élément 106 fixés sur une plaque métallique 99. Le premier et le deuxième élément 104, 106 sont en cuivre afin d'éviter une surchauffe de la matière lors de l'émission d'un faisceau laser sur le dispositif de détection 100. En effet, la matière cuivre est de couleur rouge, tout comme le faisceau laser. Le cuivre opère donc comme un miroir et absorbe très peu d'énergie. Par conséquent, le cuivre chauffe très peu par rapport à d'autres matières. Comme montré sur la figure 5, le premier élément 104 est de forme circulaire avec une hauteur définie et comprend une ouverture centrale circulaire 107 dans une surface supérieure 101 de la partie supérieure 102. Le premier élément 104 comprend également des encoches ou évents 110. Ces encoches 110 sont chacune orientées à 45° par rapport à l'axe du faisceau laser. La figure 5 montre deux encoches 110 destinées à améliorer le refroidissement du dispositif de détection 100. En effet, lorsque le faisceau laser balaye la zone de balayage ou surface 108, décrite ci-après, du dispositif de détection 100, la buse émet également un jet de gaz secondaire 17. Grâce aux évents 110, le gaz secondaire 17 peut circuler librement entre les surfaces coniques puis s'échapper par les évents 110. Le dispositif de détection 100 est alors refroidi par convection. L'angle défini de 45° (degrés) permet d'éviter que les réflexions du faisceau laser ne sortent du dispositif de détection 100 pour endommager l'environnement dudit dispositif de détection 100.

Le deuxième élément 106 est montré sur la figure 6 et comprend une forme circulaire d'une épaisseur définie. Au centre du deuxième élément 106 se trouve une surface 108 en forme de pointe percée d'une ouverture circulaire ou trou calibré 111 d'un diamètre d'environ 800µm (micromètres) à 50 µm (micromètres) près. Ce diamètre correspond environ au diamètre du faisceau laser. Le trou calibré 111 est situé au centre de l'ouverture centrale circulaire 107.

Le deuxième élément 106 comprend également un canal de refroidissement en forme de U dont les orifices d'entrée 62 et de sortie 64 pour le fluide de refroidissement, par exemple de l'eau, sont visibles sur les figures 4 et 6. La figure 4 montre également les raccords 66 d'attache rapide de tuyauterie.

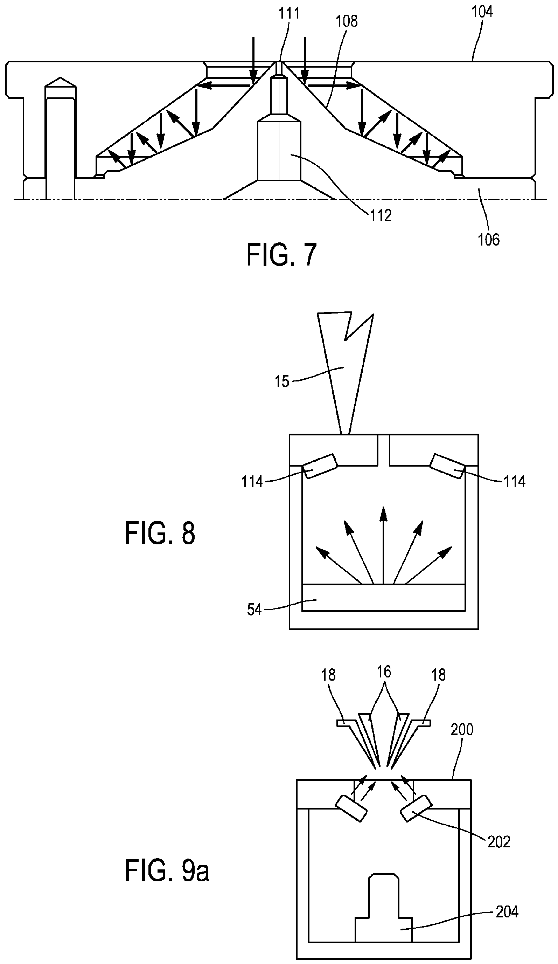

Comme montré sur la vue en coupe partielle de la figure 7, les formes du premier et du deuxième élément 104, 106 sont adaptées pour que les réflexions du faisceau laser soient infinies entre les deux surfaces coniques intérieures comme montré sur la figure 7 avec les flèches. Ainsi, l'énergie du faisceau laser est dissipée au fur et à mesure de sa propagation, et les réflexions néfastes sur la buse 10 sont évitées. La surface 108 ou zone de balayage est également montrée sur la figure 7.

Comme montré sur la figure 3, le dispositif de détection 100 comprend également une partie inférieure 103 comprenant trois compartiments 50 comportant chacun un capteur tel qu'une photodiode 114 (non visibles). Seuls deux compartiments 50 sont montrés sur la figure 3. La partie inférieure 103 comprend également un réceptacle 52 comprenant un élément absorbant tel qu'une plaque martyre en graphite 54 (non visible) dans le fond du réceptacle 52. Ainsi, le faisceau laser passe à travers le trou calibré 111 et vient frapper la plaque martyre en graphite 54. Une partie de l'énergie ou énergie résiduelle est réfléchie par la plaque martyre en graphite 54. La figure 8 montre sur un schéma de principe et selon une vue en coupe deux photodiodes 114 localisées sous le deuxième élément 106. Les photodiodes 114 sont disposées en regard de la plaque martyre en graphite 54 pour pouvoir capter ou détecter ou mesurer l'énergie résiduelle du faisceau laser 15 réfléchie par la plaque martyre en graphique 54. Le modèle de chaque photodiode 114 est par exemple PIN-5DPI de la marque Osi Optoelectronics. Les photodiodes 114 sont utilisées par exemple en mode photovoltaïque. Les photodiodes 114 peuvent également être utilisées en mode bloquant. Chaque photodiode 114 est couplée au sein d'un circuit électronique par exemple avec un montage d'amplification à transimpédance afin d'amplifier le faible courant généré et le convertir en signal de tension plus aisément lisible par un micro-contrôleur.

Le faisceau laser 15 balaye la zone de balayage ou surface 108, visible au centre de l'ouverture centrale circulaire 107 autour du trou calibré 111, et le trou calibré 111 lui-même, en faisant par exemple des allers et retours sur cette surface 108 de manière à balayer la totalité de la surface 108. Lorsque le faisceau laser est positionné exactement au-dessus et au centre du trou calibré 111, l'énergie du faisceau laser qui atteint la plaque martyre en graphite est maximale. Ainsi, le but du module de détection est de rechercher le moment où le faisceau laser 15 et le trou calibré 111 sont parfaitement alignés. Dans la mesure où la position du trou calibré 111 est connue, on peut en déduire la position du faisceau laser 15. L'énergie résiduelle du faisceau laser 15 qui est émise par la plaque martyre en graphite 54 est mesurée par les photodiodes 114. Lorsque cette énergie est maximale, cela signifie que le faisceau laser 15 est aligné avec le trou calibré 111.

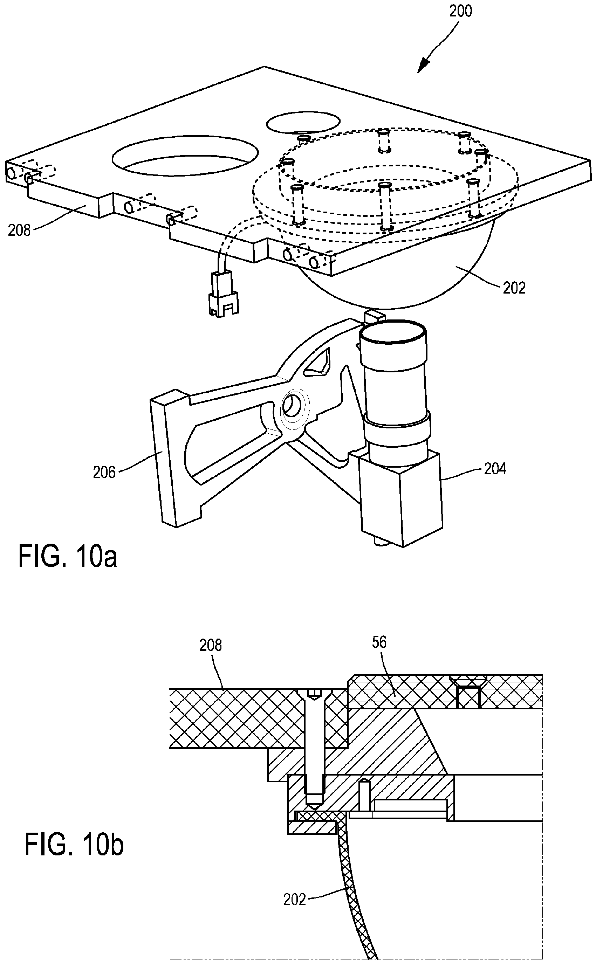

Le dispositif de détection du faisceau laser 100 comprend également des moyens structurels additionnels. Ces moyens structurels additionnels comprennent, par exemple, un épaulement sur le premier élément 104 permettant un centrage court sur une plaque de base 208 montrée sur la figure 10a afin de permettre la mise en position du dispositif de détection du faisceau laser 100 de façon exacte et connaitre la position du trou calibré 111 de manière précise.

Le dispositif de détection 100 du faisceau laser comprend aussi des moyens de fixation tels que des entretoises à vis et des filetages dans la plaque de base 208 pour permettre le maintien en position du dispositif de détection 100. Le dispositif de détection 100 du faisceau laser doit être positionné de façon très précise afin de connaître la position exacte du trou calibré 111 afin d'en déduire ultérieurement la position du faisceau laser lorsque celui-ci est aligné avec le trou calibré 111.

Lors de l'utilisation du dispositif de détection 100 du faisceau laser 15, le procédé de détection comprend les étapes décrites ci-après. La buse 10 émet un faisceau laser d'une puissance d'environ, par exemple, 200 à 300 W (Watts) ou de préférence 500 à 700 W (Watts) qui parcourt la surface de la pointe percée 108 visible par l'intermédiaire de l'ouverture centrale circulaire 107 de la pièce supérieure 104. Ainsi, la zone de balayage 108 est située en dessous de l'ouverture centrale circulaire 107. Le faisceau laser 15 va balayer la surface 108 en occupant plusieurs positions. Lorsque le faisceau laser 15 occupe des positions situées à l'extérieur du trou calibré, l'énergie du faisceau laser est diffusée dans le cuivre par l'intermédiaire des réflexions infinies visibles par les flèches sur la figure 7. Les photodiodes fournissent alors un signal nul. Lorsque le faisceau laser occupe des positions situées au-dessus du trou de manière non centrée, l'énergie du faisceau laser est transmise via le trou circulaire 111 à la plaque martyre en graphite 54. Les photodiodes 114 captent une quantité d'énergie résiduelle et produisent alors un signal électrique non nul. Lorsque le faisceau laser passe totalement au-dessus du trou calibré 111 et est aligné avec le trou calibré 111, l'ensemble de l'énergie du faisceau laser traverse le trou calibré 111 et touche la plaque martyre en graphite 54 qui en absorbe la majeure partie. L'énergie résiduelle du faisceau laser est mesurée par les photodiodes 114 puis filtrée au moyen des circuits électroniques. Dans cette situation, l'énergie résiduelle captée par les photodiodes est maximale. Pour l'ensemble des positions occupées par le faisceau laser, un signal électrique ayant la forme d'une gaussienne est produit. La position du faisceau laser aligné avec le trou calibré 111 correspond au pic de la gaussienne. Ensuite, le journal des positions machine est utilisé. Il s'agit d'un fichier fourni par la machine de fabrication additive et qui enregistre les positions de la tête de fabrication qui émet le faisceau laser et donc de la buse afin de connaître la position exacte de ladite tête de fabrication à un instant t. Ce fichier génère une entrée toutes les 15 ms (millisecondes) environ. Ainsi, le journal des positions et le signal obtenu par les photodiodes sont synchronisés ou mis en correspondance temporelle pour obtenir les coordonnées X et Y correspondant au point focal c'est-à-dire au centre du faisceau laser de façon relative à la position du dispositif de détection 100 du faisceau laser.

Ainsi, le procédé de détection de la position du faisceau laser comprend les étapes suivantes pour la buse 10 se déplaçant selon des positions définies dans un repère (O,x,y) au-dessus de la surface 108 contenant le trou calibré 111 :
- émission d'un faisceau laser d'une puissance déterminée et balayage de la surface 108 c'est-à-dire autour du trou calibré 111 et dans le trou calibré 111 de sorte que l'énergie du faisceau laser est dissipée entre le premier et le deuxième élément 104, 106 ;
- mesure et filtrage du signal obtenu à l'aide des photodiodes 114 ledit signal représentant la quantité d'énergie lumineuse du laser qui traverse le trou calibré 111 et qui est réfléchi par la plaque martyre en graphite 54;
- synchronisation sur une échelle de temps ou mise en correspondance temporelle du signal électrique filtré avec les données de position de la buse de dépose 10 ou de la tête de fabrication de la machine de fabrication additive ;
- obtention dans le repère de la buse de dépose 10 ou de la tête de fabrication, de la position pour laquelle le point focal du faisceau laser est exactement au-dessus du trou calibré et est donc aligné avec le trou calibré 111 c'est-à-dire pour une valeur maximale du signal électrique filtré.

Ainsi, le dispositif de détection 100 du faisceau laser 15 permet de déterminer la position du point focal du faisceau laser 15 avec une précision de l'ordre de 50 µm (micromètres) pour une puissance de faisceau laser allant de 1 à 1000 W (Watts) environ voire au-delà de 1500 W.
- Centrage et Etat des cônes : **modes de réalisation ne faisant pas partie de l'invention.**

La figure 9a montre de manière schématique, et selon un schéma de principe, un dispositif de centrage des cônes 200. Le dispositif de centrage des cônes 200 comprend un dispositif d'éclairage 202 et une caméra 204.

Le dispositif d'éclairage 202 éclaire selon la couleur rouge. En effet, les cônes de cuivre de la buse étant de couleur rouge, cet éclairage est le plus adapté. Le dispositif d'éclairage 202 comprend un dôme lumineux par exemple de la marque Effilux et par exemple de diamètre 100 mm (millimètres) qui comprend un trou sur la surface inférieure dudit dôme.

La caméra 204 est de très haute définition et possède un capteur noir et blanc. Ainsi, la caméra 204 est par exemple de marque Basler acA2440-20gm et possède par exemple une résolution de 2448x2048. La focale est de 35 mm (millimètres) par exemple. L'objectif choisi est, par exemple, le Fujinon HF35HA1B.

Comme montré sur la figure 10a, le dispositif de centrage des cônes 200 comprend également un support 206 pour la caméra 204.

Le dispositif de centrage 200 des cônes comprend une plaque de base 208 en polycarbonate en-dessous de laquelle se situent le dispositif d'éclairage 202 et la caméra 204. La plaque de base comprend trois perçages ou trois trous afin d'intégrer le dispositif de détection 100 du faisceau laser, le dispositif de centrage 200 des cônes et le système d'analyse du jet de poudre décrit ci-après. Comme montré sur la figure 10b, la caméra 204 est protégée, par une vitre 56 en polycarbonate, des poussières et des poudres résiduelles qui pourraient s'introduire dans le dispositif de centrage 200 des cônes à travers le trou au fond du dispositif d'éclairage 202.

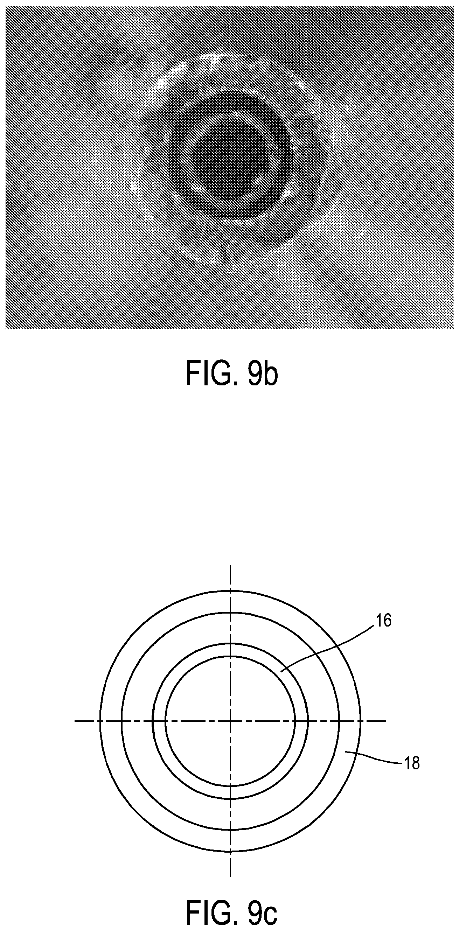

Lors de l'utilisation du dispositif de centrage 200 des cônes, le centre du faisceau laser tel que mesuré avec le dispositif de détection du faisceau laser, doit être aligné avec un repère connu de la caméra 204, par exemple le centre d'une image prise par la caméra 204 comme montré sur la figure 9b.

L'ensemble des étapes de calcul réalisées dans le cadre du fonctionnement du dispositif de centrage 200 des cônes est effectué par un logiciel de visualisation industrielle. La caméra acquiert des images relatives à l'extrémité de la buse et qui correspondent aux cercles concentriques montrés sur la figure 9c.

Le procédé de centrage 200 des cônes comprend d'abord une étape de calcul des centres associés aux différents diamètres visibles des cônes extérieur 18 et intermédiaire 16 montrés sur la figure 9c. Ensuite, le procédé comprend une étape de calcul du décalage selon l'axe horizontal OX et l'axe vertical OY du faisceau laser ainsi que celui des différents centres de cercles correspondant aux cônes et calculés dans l'étape précédente.

Si ces paramètres ont des valeurs correctes par rapport à des valeurs de référence déterminées, le procédé se poursuit avec les étapes suivantes. Le procédé comprend ainsi une étape de calcul des diamètres intérieurs et extérieurs des différents cônes intérieur et intermédiaire par la technique des moindres carrés. Le désalignement maximal toléré autour du faisceau laser est de l'ordre de 50 µm (micromètres). Puis, le procédé comprend une étape de détection et de mesure des défauts de type déformation, obstruction, manque de matière sur les deux cônes visibles au moyen d'une reconnaissance d'images par logiciel.

Si un défaut est détecté au moyen d'une reconnaissance d'images par logiciel, le procédé se poursuit avec une intervention de l'utilisateur pour effectuer l'opération nécessaire sur la buse telle que le réalignement ou le nettoyage des cônes, ou le changement complet des cônes s'ils sont abîmés.

Si aucun défaut n'est détecté, le procédé se poursuit avec une étape de sauvegarde des données mesurées dans une base de données.

Ainsi, le procédé de centrage des cônes comprend les étapes suivantes :
- placement du faisceau laser avec une position mesurée avec le module de détection du faisceau laser sur le repère défini, c'est-à-dire le centre de l'image prise par la caméra
- lancement de l'acquisition d'image
- détection de présence de défauts sur les cônes et intervention de l'utilisateur pour un changement des cônes si nécessaire
- mesure des diamètres des cônes extérieurs et intermédiaires
- comparaison avec des valeurs de référence et intervention de l'utilisateur pour un changement des cônes si nécessaire
- calcul des centres associés auxdits diamètres
- calcul du décalage selon l'axe horizontal OX et selon l'axe horizontal OY des cônes par rapport au faisceau laser c'est-à-dire par rapport au centre de la caméra
- en fonction des résultats, intervention de l'utilisateur sur la buse pour un réalignement des cônes.

Ainsi, le dispositif de centrage 200 des cônes permet de vérifier que les cônes sont concentriques autour du faisceau laser, mais aussi qu'ils sont en bon état c'est à dire ronds et propres. Le dispositif de centrage 200 des cônes permet également de garder un historique de l'état des cônes au fur et à mesure des fabrications.
- Analyse du jet de poudre : **modes de réalisation ne faisant pas partie de l'invention**

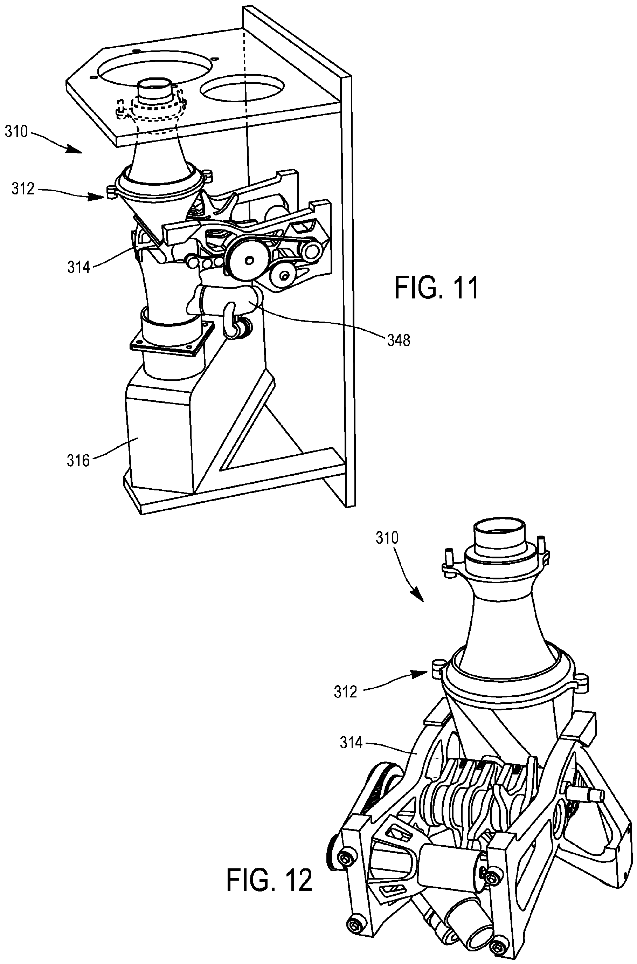

Les figures 11 et 12 montrent un système d'analyse de jet de poudre 310. Le système d'analyse 310 comprend un dispositif de séparation 312, un dispositif d'ouverture 314, un dispositif de pesée ou balance 316 et un dispositif d'aspiration 348.

Le système d'analyse est adapté pour fonctionner avec le dispositif de détection 100 du faisceau laser et le dispositif de centrage 200 des cônes.

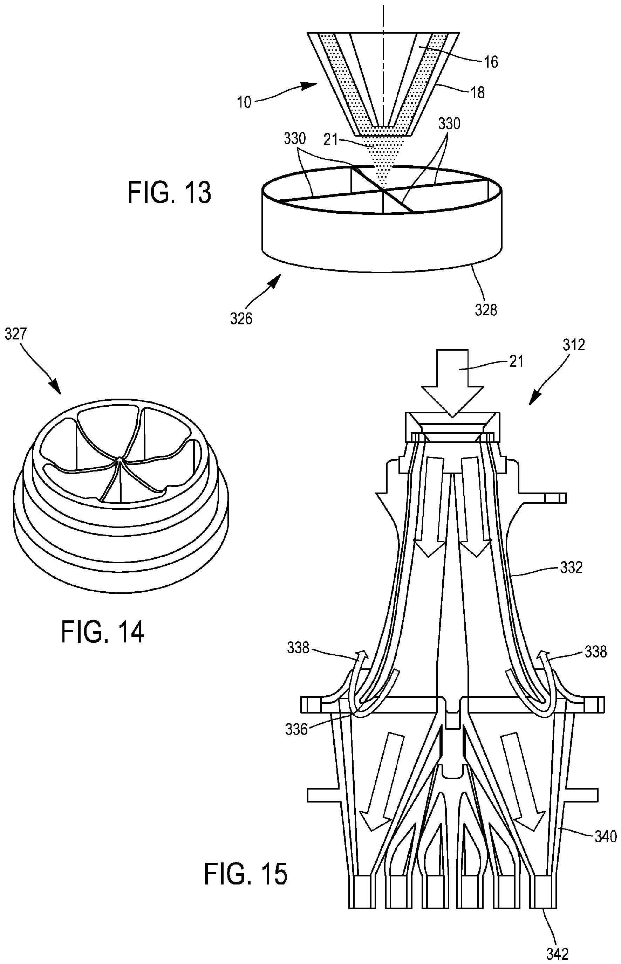

Le système d'analyse 310 est également adapté pour fonctionner avec une buse de dépose intégrée dans une machine de fabrication additive telle que connue dans l'état de l'art et montrée sur les figures 2 et 13. La buse de dépose 10 comprend notamment le cône intermédiaire 16 et le cône extérieur 18. Le jet de poudre 21 contient de la poudre métallique et un gaz porteur. Le jet de poudre 21 prend la forme d'un jet par l'intermédiaire des cônes intermédiaire 16 et extérieur 18. Le jet de poudre incident ou initial 21 possède un diamètre en sortie de cône d'environ 10mm et une distance focale à partir de la sortie du cône extérieur d'environ 5mm.

Comme montré sur la figure 13, selon un schéma de principe, le dispositif de séparation 312 comprend un élément séparateur 326 pourvu d'une paroi latérale circulaire 328 qui définit un cylindre. Le diamètre de l'élément séparateur 326 est de l'ordre de quelques centimètres. L'élément séparateur 326 comprend une ou plusieurs parois de séparation 330 qui sont disposées de manière symétrique par rapport à l'axe de symétrie central du cylindre. Les parois de séparation 330 divisent ainsi le volume intérieur de l'élément séparateur 326 en un nombre de portions ou d'alvéoles ayant chacune le même volume. Sur la figure 13, les quatre parois de séparation 330 divisent le volume de l'élément séparateur 326 en quatre portions de volume égal. Le nombre de parois de séparation 330 peut varier pour obtenir un nombre de portions de volume égal compris entre 2 et 10 par exemple. La présence d'un nombre élevé de portions de volume égal permet de mieux vérifier l'homogénéité du jet de poudre. La longueur d'une paroi de séparation peut être la longueur du rayon de l'élément séparateur ou la longueur du diamètre de l'élément séparateur.

Comme montré sur la figure 14, selon une autre variante, l'élément séparateur 327 peut contenir six parois de séparation pour obtenir six portions de volume égal. L'épaisseur des parois de séparation 330 doit être la plus faible possible, et est de l'ordre de 0,1mm par exemple, afin de perturber au minimum l'écoulement du jet de poudre 21 et de réaliser une séparation nette du jet de poudre.

L'élément séparateur 326, 327 peut être réalisé en métal pour pouvoir résister à l'érosion par le jet de poudre. L'élément séparateur 326 peut être réalisé par fabrication additive SLM (en anglais : Selective Laser Melting) en utilisant par exemple un acier inox 316L ou un acier à outil de type H13 (X40CrMoV5-1). Le diamètre de l'élément séparateur 326, 327 est d'environ 3 cm (centimètres).

Ainsi, comme montré sur la figure 13, le jet de poudre initial 21 qui tombe sur l'élément séparateur 326 se divise à travers les portions dudit élément séparateur. L'élément séparateur 326 de la figure 13 permet de diviser ou séparer le jet de poudre en quatre portions de jet de poudre et l'élément séparateur 327 de la figure 14 permet de diviser ou séparer le jet de poudre en six portions de jet de poudre.

Le dispositif de séparation 312 comprend des moyens pour détecter la quantité de poudre dans chaque portion de jet de poudre. Ces moyens comprennent d'une part une chambre de détente 332 décrite ci-dessous et une chambre de stockage 340 décrite ci-dessous.

Ainsi, comme montré sur la figure 15, le dispositif de séparation 312 comprend également un premier réceptacle ou chambre de détente 332 ayant une extrémité cylindrique. En effet, le premier réceptacle 332 est une zone destinée à servir de chambre de détente pour le gaz porteur contenu dans le jet de poudre 21 et lui permet de s'échapper aux travers d'une chicane circonférentielle 336 comme montré par les flèches 338 tout en permettant à la poudre de s'écouler dans le second réceptacle 340.

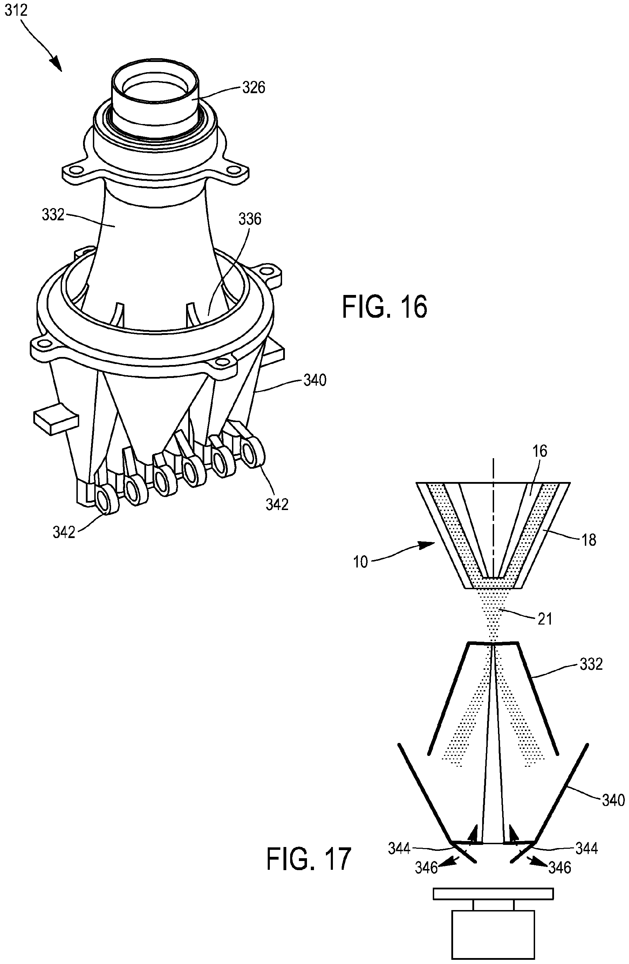

Le second réceptacle ou chambre de stockage 340 montré sur la figure 15 comprend des trompes de stockage 342 pour stocker la poudre qui s'est écoulée. La chambre de stockage 340 possède une extrémité linéaire permettant la fixation du dispositif d'ouverture décrit ci-après comme montré sur la figure 16.

La figure 16 montre une vue en perspective du dispositif de séparation 312 de la figure 15.

La structure formée par l'élément séparateur 327 c'est-à-dire par la paroi latérale circulaire 328 et les parois de séparation 330, ainsi que la chambre de détente 332 forment des conduits où s'écoulent les portions de jets de poudre, chaque portion de jet de poudre s'écoulant dans un conduit respectif déterminé. Les trompes de stockage 342 forment l'extrémité des conduits.

Chaque trompe de stockage 342 comprend un clapet 344 pour permettre d'ouvrir et de fermer chaque conduit. Le mouvement d'ouverture et de fermeture des clapets 344 est représenté sur la figure 17, selon un schéma de principe, par les flèches bidirectionnelles 346. Chaque clapet 344 comprend un ressort de rappel 60.

Les clapets 344 fonctionnent avec un dispositif d'ouverture 314.

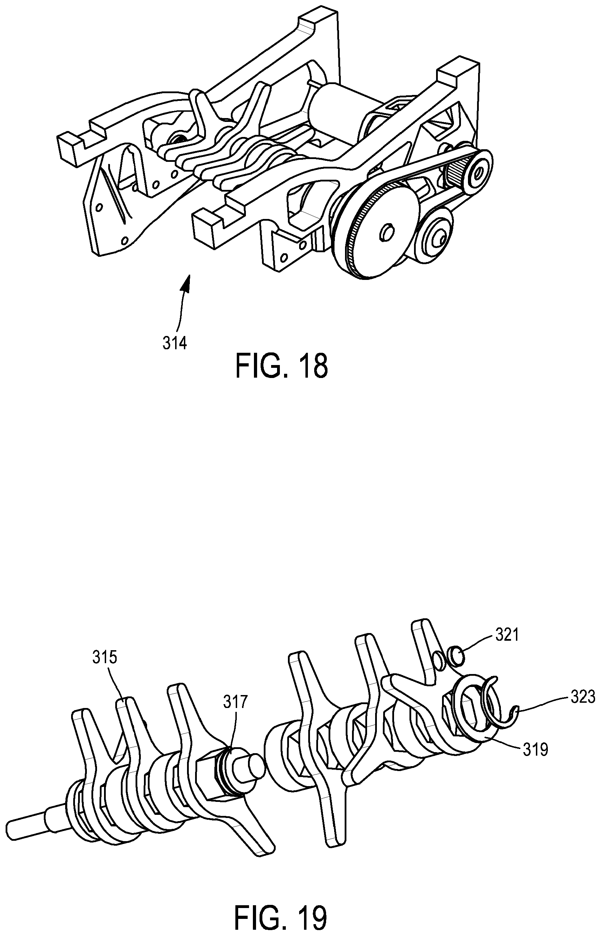

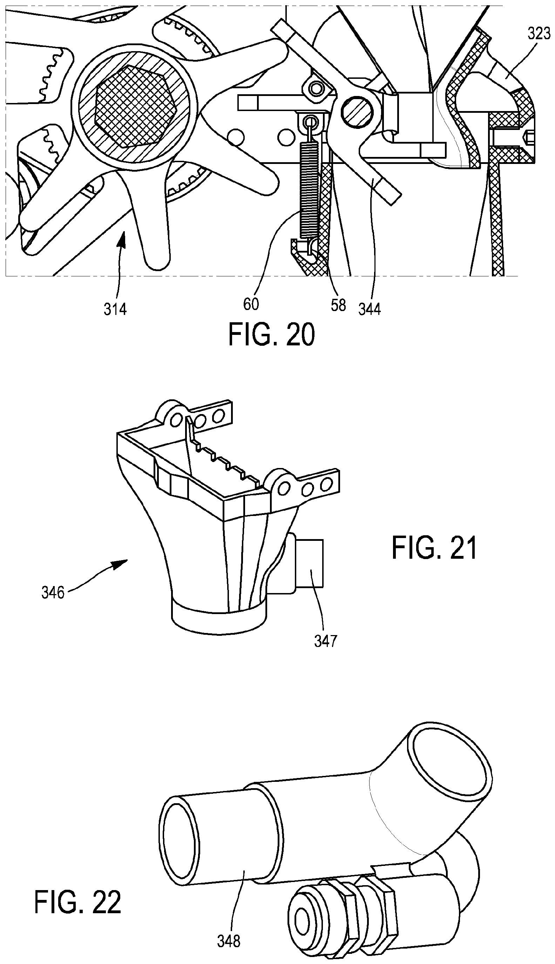

Le dispositif d'ouverture 314 des clapets est automatisé au moyen de cames réglables par exemple comme montré sur la figure 18. Chaque clapet 344 peut ainsi être piloté indépendamment l'un de l'autre. Le nombre de came est égal au nombre de clapets lui-même égal au nombre de portions de l'élément séparateur 327. En effet, comme montré sur la figure 19, le dispositif d'ouverture 314 comprend six cames 315 montées en butée contre épaulement sur un axe 317 à section heptagonale, espacées par des entretoises et bloquées par un anneau élastique 323. La came 315 située à l'extrémité de l'axe 317 comprend un aimant 321. L'axe 317 est monté sur des paliers en PTFE (polytétrafluoroéthylène) et est entraîné par un moteur avec un système de poulie et de courroie possédant un rapport de réduction de deux pour réduire la vitesse de rotation au maximum. Le dispositif d'ouverture 314 comprend un capteur à lame souple ou à effet Reed qui est positionné latéralement afin de détecter l'instant où la came située à l'extrémité de l'axe 317 passe devant le capteur à lame souple. La figure 20 montre une vue en coupe du dispositif d'ouverture 314 avec les clapets 344. Comme montré sur la figure 20, un entonnoir 346 décrit ci-après est associé à une jupe 323 afin d'éviter qu'une quantité de poudre ne soit éjectée hors de l'entonnoir 346 lorsque les clapets se ferment sous l'effet du ressort de rappel 60. La jupe 323 permet de rediriger vers l'entonnoir les grains de poudre éjectés vers l'avant du dispositif de séparation. La longueur du système d'analyse depuis l'élément séparateur 327 jusqu'à l'entonnoir est d'environ 20 cm (centimètres).

Selon un mode de réalisation, le dispositif de séparation comprend six clapets 344.

Comme montré sur la figure 16, la chambre de détente 332 et la chambre de stockage 340 forment également les conduits pour guider la poudre vers les clapets 344. Afin de permettre à la poudre de glisser dans les conduits avec un minimum de frottements, la matière utilisée doit être lisse et de préférence conductrice pour éviter les phénomènes d'électricité statique. Ainsi, l'ensemble formé par la chambre de détente 332, la chambre de stockage 340 et les clapets 344 est réalisé en stéréolithographie. Cette technique d'impression 3D permet d'utiliser un matériau transparent, le TuskXC2700T qui possède des caractéristiques mécaniques similaires à l'ABS (Acrylonitrile Butadiène Styrène) et au PBT (polytéréphtalate de butylène). En effet, une pièce en ABS peut être remplacée par une pièce en Tusk de même géométrie dans un système mécanique sans perturber le fonctionnement dudit système mécanique.

Le système d'analyse 310 comprend également un entonnoir 346 montré sur la figure 21. Ainsi, lors de l'ouverture des clapets 344, la poudre peut s'échapper vers l'entonnoir 346. L'entonnoir 346 comprend un tuyau coaxial 347 à la sortie de l'entonnoir pour pouvoir réaliser l'aspiration de la poudre comme indiqué ci-après. Comme montré sur la figure 20, l'entonnoir 346 comprend également des tétons de maintien 58 pour les ressorts de rappel 60 du dispositif d'ouverture 314 et un renfort pour rigidifier les tétons de maintien 58. L'entonnoir 346 comprend aussi différentes pattes de fixation et trous taraudés ainsi que le passage d'axe permettant le positionnement de l'entonnoir par rapport au dispositif de séparation 312 et aux clapets 344.

Le système d'analyse 310 comprend également un dispositif de pesée ou balance 316 montré sur la figure 11. Ainsi, la forme de l'entonnoir 346 permet de guider la poudre vers la balance 316 pour déterminer le poids de poudre écoulée dans un conduit déterminé.

Le système d'analyse comprend également un dispositif d'aspiration 348 montré sur les figures 11 et 22 et capable d'évacuer la poudre présente sur la balance 316, après les mesures. Le dispositif d'aspiration 348 comprend un tube d'aspiration Venturi monopièce montré sur la figure 22 dans lequel de l'argon est injecté pour réaliser l'aspiration de la poudre.

Le système d'analyse peut être assemblé au sein d'un boîtier tel qu'un carter (non montré).

Lors de son fonctionnement, le système d'analyse 310 est placé dans l'enceinte de travail d'une machine de fabrication additive selon l'art antérieur. Le système d'analyse 310 doit être à portée de la buse 10, qui est mobile. Plus précisément, la buse 10 doit être située au-dessus du système d'analyse 310, de manière centrée. Ainsi, le système d'analyse 310 est adapté pour fonctionner avec le dispositif de détection du faisceau laser 100 et le dispositif de centrage des cônes 200 de manière préalable au fonctionnement dudit système d'analyse. Ainsi, avant le début de l'analyse du jet de poudre métallique, le faisceau laser est situé au-dessus du système d'analyse de manière centrée avec les cônes également centrés. Le fonctionnement du système d'analyse décrit ci-dessous permet alors de déterminer si le centrage des cônes est satisfaisant pour obtenir un jet de poudre homogène.

Lors d'une analyse, la buse 10 est positionnée au-dessus du système d'analyse, et au-dessus du centre de l'élément séparateur 326 comme montré sur la figure 13 qui représente un schéma de principe. Le jet de poudre initial 21 issu de la buse 10 pénètre alors dans le système d'analyse 310 par l'intermédiaire de la partie supérieure de l'élément séparateur 326 qui a pour rôle de diviser ou séparer le jet de poudre initial en un nombre de portions de jet de poudre fini. Le jet de poudre initial 21 se déverse pendant une durée déterminée.

Lorsque le jet de poudre initial 21 a été divisé, chaque portion de jet de poudre poursuit sa trajectoire dans un conduit propre, aux caractéristiques dimensionnelles déterminées pour favoriser un écoulement sans turbulence. Dans chaque conduit, la portion de jet de poudre parcourt la chambre de détente 332 afin de laisser échapper le gaz contenu dans le jet de poudre 21.

La quantité de poudre est ensuite arrêtée par le système de clapets mécanique 344 pour être stockée dans la chambre de stockage 340. En dessous de ces clapets 344 mécaniques se trouve la balance 316 qui permet de peser chaque portion de poudre comme montré sur la figure 11.

Pour initialiser le système avant l'étape de pesée sur la balance 316, tous les clapets sont ouverts en même temps pendant quelques secondes en présence d'un jet de poudre. Puis, tous les clapets sont fermés en même temps. Ensuite, la poudre remplit les trompes de stockage pendant une durée définie de l'ordre de deux à cinq minutes en fonction du débit réglé.

Le cycle de pesée débute avec l'ouverture d'un premier clapet 344 qui libère la poudre qui atteint la balance 316 pour une pesée. La valeur est enregistrée dans une base de données et rattachée au conduit, qui correspond à la première zone de prélèvement du jet de poudre.

Un deuxième clapet mécanique 344 s'ouvre à son tour, et une deuxième pesée est effectuée. La valeur ainsi relevée correspond à la somme de la première portion avec la deuxième portion. La différence des deux permet d'obtenir la valeur propre à la deuxième portion de prélèvement.

Ce cycle se répète autant de fois qu'il y a de portions de séparation de poudre.

Au final, chaque portion de poudre a été pesée, et il est donc possible de comparer la quantité de poudre dans chaque portion du jet de poudre. De plus, la somme de chaque portion permet d'obtenir la masse totale de la quantité de poudre prélevée durant un temps défini. Le débit de poudre est alors obtenu. Une fois le cycle achevé, la poudre disposée sur la balance est évacuée par le dispositif d'aspiration 348.

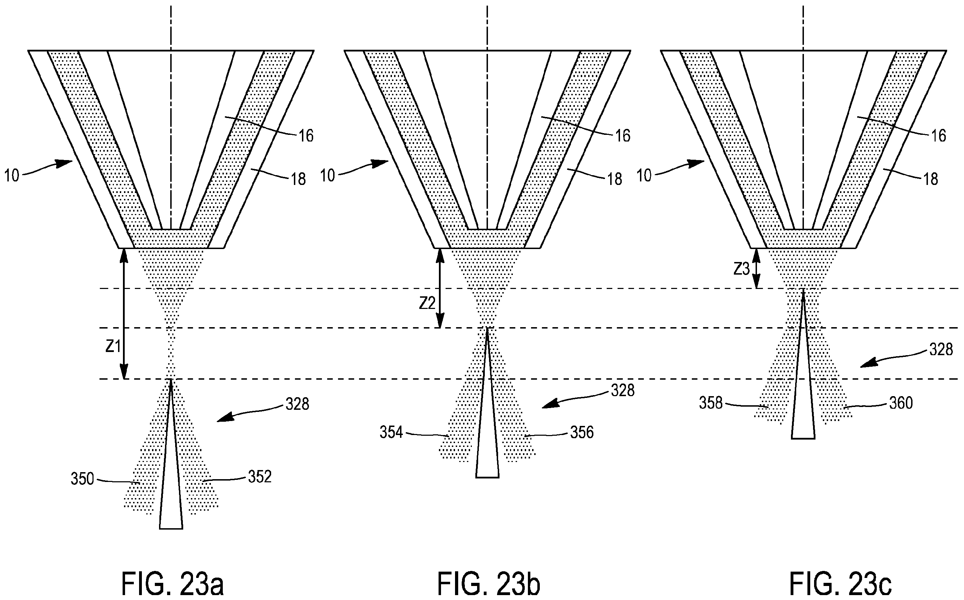

Les figures 23a, 23b et 23c montrent, selon un schéma de principe, une vue de face de l'écoulement du jet de poudre dans un élément séparateur 328 comprenant, selon un autre mode de réalisation, deux parois de séparation afin de séparer le jet de poudre initial en deux jets de poudre. L'élément séparateur 328 est situé à différentes hauteurs z par rapport à l'écoulement du jet de poudre initial. Sur la figure 23a, l'élément séparateur 328 est situé à une distance z1 de la buse 10 ce qui engendre la formation de deux portions de jet de poudre 350, 352. Sur la figure 23b, l'élément séparateur 328 est situé à une distance z2 de la buse 10 ce qui engendre la formation de deux portions de jet de poudre 354, 356. Sur la figure 23c, l'élément séparateur 328 est situé à une distance z3 de la buse 10 ce qui engendre la formation de deux portions de jets de poudre 358, 360.

Ainsi, l'effet technique du système d'analyse 310 selon l'invention est de permettre notamment une caractérisation du jet de poudre en fonction de différentes hauteurs.

L'effet technique du système d'analyse 310 est également de contrôler l'homogénéité du jet de poudre afin de valider le correct centrage des cônes de la buse. Cette mesure de l'homogénéité est réalisée en mesurant la quantité de poudre écoulée dans chaque conduit.

Enfin, le système d'analyse 310 permet aussi de déterminer le débit massique du jet de poudre.

Le système d'analyse comprend également un dispositif électronique de contrôle (non montré) afin de contrôler le moteur permettant d'ouvrir les clapets 344 et d'acquérir les données de la balance 316 pour réaliser les calculs des différentes pesées.

L'ensemble formé par le dispositif de détection du faisceau laser, le dispositif de centrage des cônes et le système d'analyse du jet de poudre est donc placé à l'intérieur de la machine de fabrication additive et nécessite seulement de placer la buse de dépose au-dessus du dispositif de détection du faisceau laser pour débuter le processus de détection du faisceau laser. Ensuite, le dispositif de centrage des cônes peut être utilisé, grâce à une distance connue entre le centre du dispositif de centrage 200 des cônes et le trou calibré 111, puis le système d'analyse du jet de poudre est utilisé à son tour.

Les figures 8, 9a, 13, 17 et 23a, 23b et 23c représentent des schémas de principe et sont simplifiés par rapport aux autres figures représentant les modes de réalisation possibles.

Les modes de réalisation précédemment décrits sont indiqués à titre d'exemples uniquement.

## Revendications

1. Dispositif de détection (100) de la position d'un faisceau laser (15) de diamètre déterminé et émis par un laser d'une machine de fabrication additive, ledit dispositif de détection (100) comprenant une partie supérieure (102) comprenant une zone de balayage (108) du faisceau laser (15), ladite zone de balayage (108) étant située en dessous d'une ouverture centrale circulaire (107) dans une surface supérieure (101) de la partie supérieure (102), et comprenant en son centre un trou circulaire (111) de diamètre essentiellement égal au diamètre du faisceau laser et de position déterminée, la partie supérieure (102) comprenant un premier (104) et un deuxième élément (106), le deuxième élément (106) comprenant le trou circulaire (111), le premier (104) et le deuxième élément (106) étant configurés de sorte que les réflexions du faisceau laser (15) entre le premier et le deuxième élément (104, 106) sont infinies pour dissiper l'énergie du faisceau laser (15) ;
le dispositif de détection (100) comprenant une partie inférieure (103), la partie inférieure (103) comprenant au moins un capteur (114) pour capter une partie de l'énergie transmise par le faisceau laser (15) et comprenant une plaque martyre en graphite (54) pour absorber la partie restante de l'énergie transmise par le faisceau laser (15) ;
de sorte que lorsque le faisceau laser (15) balaie la zone de balayage (108) selon une pluralité de positions, le capteur (114) capte une partie de l'énergie transmise par le faisceau laser pour chaque position, la partie de l'énergie transmise étant maximale lorsque le faisceau laser (15) est aligné avec le trou circulaire (111).

2. Dispositif de détection selon la revendication 1, le capteur (114) comprenant une photodiode.

3. Dispositif de détection selon la revendication 2, le capteur (114) comprenant trois photodiodes.

4. Dispositif de détection selon l'une des revendications précédentes, le premier élément (104) comprenant des évents (110).

5. Procédé de détection de la position d'un faisceau laser (15) émis par un laser d'une machine de fabrication additive par un dispositif de détection (100) selon l'une des revendication 1 à 4, le procédé comprenant les étapes suivantes :
- émission d'un faisceau laser (15) de diamètre déterminé ;
- balayage du faisceau laser (15) sur toute une zone de balayage (108) déterminée comprenant un trou circulaire (111) de diamètre essentiellement égal au diamètre du faisceau laser (15) et de position déterminée, ledit balayage comprenant une pluralité de positions du faisceau laser (15);
- détection d'une partie de l'énergie transmise par le faisceau laser (15) pour chaque position du faisceau laser (15) lors du balayage ;
- mesure et filtrage du signal obtenu à l'aide d'un capteur (114) ledit signal représentant la quantité d'énergie lumineuse du laser qui traverse le trou circulaire (111) et qui est réfléchi par la plaque martyre en graphite (54).
- émission d'un signal électrique correspondant à la quantité d'énergie détectée pour chaque position du faisceau laser (15) lors du balayage ;
- détermination de la valeur du signal électrique maximal ;
- recherche de l'instant t correspondant à la position de la tête de fabrication pour la valeur du signal électrique maximal ;
- détermination de la position du faisceau laser (15).

## Patentansprüche

1. Detektionsvorrichtung (100) der Position eines Laserstrahlbündels (15) mit einem bestimmten Durchmesser und der von einem Laser einer Maschine zur additiven Herstellung ausgegeben ist, wobei die genannte Detektionsvorrichtung (100) einen oberen Teil (102) umfasst, umfassend einen Abtastbereich (108) des Laserstrahlbündels (15), wobei der genannte Abtastbereich (108) unterhalb einer zentralen kreisförmigen Öffnung (107) auf einer oberen Fläche (101) des oberen Teils (102) angeordnet ist und in seinem Zentrum ein kreisförmiges Loch (111) mit einem Durchmesser, der im Wesentlichen gleich dem Durchmesser des Laserstrahlbündels ist, und mit einer bestimmten Position umfasst, wobei der obere Teil (102) ein erstes (104) und ein zweites Element (106) umfasst, wobei das zweite Element (106) ein kreisförmiges Loch (111) umfasst, wobei das erste (104) und das zweite Element (106) derart ausgestaltet sind, dass die Reflexionen des Laserstrahlbündels (15) zwischen dem ersten und dem zweiten Element (104, 106) unendlich sind, um die Energie des Laserstrahlbündels (15) zu zerstreuen;
wobei die Detektionsvorrichtung (100) einen unteren Teil (103) umfasst, wobei der untere Teil (103) wenigstens einen Sensor (114) zum Erfassen eines Teils der vom Laserstrahlbündel (15) übertragenen Energie umfasst und eine Opferplatte aus Graphit (54) zum Aufnehmen des restlichen Teils der vom Laserstrahlbündel (15) übertragenen Energie umfasst;
derart, dass, wenn das Laserstrahlbündel (15) den Abtastbereich (108) gemäß einer Vielzahl von Positionen abtastet, der Sensor (114) einen Teil der vom Laserstrahlbündel übertragenen Energie für jede Position erfasst, wobei der Teil der übertragenen Energie maximal ist, wenn das Laserstrahlbündel (15) mit dem kreisförmigen Loch (111) ausgerichtet ist.

2. Detektionsvorrichtung gemäß Anspruch 1, wobei der Sensor (114) eine Fotodiode umfasst.

3. Detektionsvorrichtung gemäß Anspruch 2, wobei der Sensor (114) drei Fotodioden umfasst.

4. Detektionsvorrichtung gemäß einem der voranstehenden Ansprüche, wobei das erste Element (104) Luftabzüge (110) umfasst.

5. Detektionsverfahren der Position eines Laserstrahlbündels (15), das von einem Laser einer Maschine zur additiven Herstellung von einer Detektionsvorrichtung (100) gemäß einem der Ansprüche 1 bis 4 ausgegeben wird, wobei das Verfahren die folgenden Schritte umfasst:
- Ausgabe eines Laserstrahlbündels (15) mit einem bestimmten Durchmesser;
- Abtasten des Laserstrahlbündels (15) auf einem bestimmten gesamten Abtastbereich (108), der ein kreisförmiges Loch (111) mit einem Durchmesser umfasst, der im Wesentlichen gleich dem Durchmesser des Laserstrahlbündels (15) und der bestimmten Position entspricht, wobei das genannte Abtasten eine Vielzahl von Positionen des Laserstrahlbündels (15) umfasst;
- Detektion eines Teils der vom Laserstrahlbündel (15) übertragenen Energie für jede Position des Laserstrahlbündels (15) beim Abtasten;
- Messung und Filterung des mithilfe eines Sensors (114) erhaltenen Signals, wobei das genannte Signal die Leuchtenergiemenge des Lasers, die das kreisförmige Loch (111) durchquert und die von der Opferplatte aus Graphit (54) reflektiert wird, erhalten wird;
- Ausgabe eines elektrischen Signals, das der Energiemenge entspricht, die für jede Position des Laserstrahlbündels (15) beim Abtasten detektiert wird;
- Bestimmung des Wertes des maximalen elektrischen Signals;
- Suche des Moments t, der der Position des Herstellungskopfes entspricht, für den Wert des maximalen elektrischen Signals;
- Bestimmung der Position des Laserstrahlbündels (15).

## Claims

1. A device (100) for detecting the position of a laser beam (15) of determined diameter and emitted by a laser of an additive manufacturing machine, said detection device (100) comprising an upper portion (102) comprising a scanning area (108) of the laser beam (15), said scanning area (108) being located below a circular central opening (107) in an upper surface (101) of the upper portion (102) and comprising at its center a circular hole (111) of diameter substantially equal to the diameter of the laser beam and of determined position, the top portion (102) comprising a first (104) and a second element (106), the second element (106) comprising the circular hole (111), the first (104) and the second element (106) being configured such that the reflections of the laser beam (15) between the first and the second element (104, 106) are infinite to dissipate the energy of the laser beam (15) ;
the detection device (100) comprising a bottom portion (103), the bottom portion (103) comprising at least one sensor (114) for sensing a portion of the energy transmitted by the laser beam (15) and comprising a graphite martyr plate (54) for absorbing the remaining portion of the energy transmitted by the laser beam (15)
so that when the laser beam (15) scans the scan area (108) at a plurality of positions, the sensor (114) captures a portion of the energy transmitted by the laser beam for each position, the portion of the transmitted energy being maximum when the laser beam (15) is aligned with the circular hole (111).

2. The detection device of claim 1, the sensor (114) comprising a photodiode.

3. The detection device of claim 2, the sensor (114) comprising three photodiodes.

4. The detection device of any of the preceding claims, the first element (104) comprising vents (110).

5. A method of detecting the position of a laser beam (15) emitted by a laser of an additive manufacturing machine by a detection device (100) according to any of claims 1 to 4, the method comprising the following steps:
- emission of a laser beam (15) of determined diameter ;
- scanning the laser beam (15) across a determined scan area (108) comprising a circular hole (111) of diameter substantially equal to the diameter of the laser beam (15) and of determined position, said scanning comprising a plurality of positions of the laser beam (15)
- detecting a portion of the energy transmitted by the laser beam (15) for each position of the laser beam (15) during the scan;
- measuring and filtering the resulting signal with a sensor (114), said signal representing the amount of light energy from the laser that passes through the circular hole (111) and is reflected from the graphite martyr plate (54)
- emission of an electrical signal corresponding to the quantity of energy detected for each position of the laser beam (15) during the scanning;
- determination of the value of the maximum electrical signal;
- search for the time t corresponding to the position of the manufacturing head for the value of the maximum electrical signal;
- determining the position of the laser beam (15).
